# EUROPEAN PATENT SPECIFICATION

(11) **EP 3 471 069 B1**
(45) Date of publication and mention of the grant of the patent: **04.12.2024**
(21) Application number: 18199562.2
(22) Date of filing: 10.10.2018
(51) Int. Cl.: H04W 12/06, H04W 4/48, G07C 9/00

(54) **TERMINAL-VEHICLE LINKING METHOD, TERMINAL-VEHICLE LINKING APPARATUS, AND NON-TRANSITORY COMPUTER-READABLE MEDIUM STORING TERMINAL-VEHICLE LINKING PROGRAM**
VERFAHREN ZUR VERBINDUNG VON TERMINAL-FAHRZEUGEN, VORRICHTUNG ZUR VERBINDUNG VON TERMINAL-FAHRZEUGEN UND NICHT-FLÜCHTIGES, COMPUTERLESBARES MEDIUM ZUM SPEICHERN EINES TERMINAL-FAHRZEUGVERBINDUNGSPROGRAMMS
PROCÉDÉ DE LIAISON TERMINAL-VÉHICULE, APPAREIL DE LIAISON TERMINAL-VÉHICULE ET SUPPORT D'INFORMATIONS LISIBLE SUR ORDINATEUR NON TRANSITOIRE STOCKANT UN PROGRAMME DE LIAISON TERMINAL-VÉHICULE

(30) Priority: 12.10.2017 JP 2017198712; 08.02.2018 JP 2018021356
(43) Date of publication of application: 17.04.2019
(73) Proprietor: Hitachi, Ltd., Tokyo 100-8280 (JP)
(72) Inventor: Terashima, Yuichi, Tokyo, 100-8280 (JP); Nakano, Takafumi, Ibaraki, 319-1221 (JP)
(74) Representative: Manitz Finsterwald Patent- und Rechtsanwaltspartnerschaft mbB

(56) References cited:
- JP-A- 2004 190 233
- US-A1- 2002 135 466
- US-A1- 2013 179 005
- US-A1- 2017 008 490
- US-A1- 2017 104 865

## Description

### BACKGROUND OF THE INVENTION

### 1. Field of the Invention

The present invention relates to a terminal-vehicle linking method, a terminal-vehicle linking apparatus, and a non-transitory computer-readable medium storing a terminal-vehicle linking program.

### 2. Description of the Related Art

Vehicle keys used for locking the doors of vehicles or other purposes have recently been transitioning to electronic keys, which have been developed from conventional mechanical keys. For example, the driver, holding an electronic key inside a pocket, approaches the vehicle. The door to the driver's seat is then automatically unlocked. In more advanced forms, such an electronic key is incorporated in a portable terminal apparatus such as a so-called smartphone. That is, it is unnecessary for the driver to carry a vehicle key separately from a portable terminal apparatus.

Besides electronic keys, valet parking has recently been spread mainly overseas, and is also being put into practical use in Japan. In the valet parking, a driver completely entrusts an employee of the parking lot to drive the vehicle into the parking lot or out of the parking lot. Assume for example that a guest of a hotel has driven a vehicle and arrived at the entrance of the hotel. Then, the guest temporarily pulls over the vehicle at the entrance and requests the employee of the hotel to park the vehicle. The employee drives the vehicle of the guest from the entrance to the parking lot and parks the vehicle in an appropriate space. When the guest is about to depart from the hotel, the guest requests the employee of the hotel to drive the vehicle out of the parking lot. Upon receiving the request, the employee of the hotel drives the vehicle of the guest from the parking lot to the entrance and temporarily pulls over the vehicle at the entrance. Then, the guest drives the vehicle toward the next destination.

In the valet parking, the management of a vehicle of a guest is entrusted to a hotel for a time period from when the guest arrives at the hotel to when the guest departs from the hotel. For example, an employee of a hotel moves vehicles to the parking lot one by one every time when a guest arrives with a vehicle, or all at once when a certain number of vehicles have arrived. In some cases, an employee moves a vehicle of a long-stay guest within a parking lot. In many cases, an employee of a hotel uses a portable terminal apparatus carried by the employee as a temporal electronic key for a vehicle during a period while the guest of the vehicle stays in the hotel. In such case, it is necessary to additionally allocate a portable terminal apparatus as an electronic key to a certain vehicle and release the allocation in series, and techniques for such application are increasingly spreading these days.

In addition, with recent advancements of automated driving technologies, automated valet parking has been attracting attention, which allows a vehicle capable of automated driving to travel within a parking lot to be moved into or out of a parking space. In the automated valet parking, in accordance with an instruction from an owner of a vehicle who carries a portable terminal apparatus temporarily or permanently permitted as an electronic key for the vehicle or from an employee of a hotel who is entrusted by the owner (someone who is allowed to instruct the vehicle), the vehicle moves into or out of a parking spot by itself. The moving of the vehicle into or out of a parking spot needs to be triggered by an instruction from someone who is permitted to instruct the vehicle. For this reason, there is a demand for a technique of associating a portable terminal apparatus of someone who is permitted to instruct a vehicle with the corresponding vehicle.

In Japanese Patent Application Publication No. 2016-133969, the owner of a vehicle issues a password to a non-owner (corresponding to an employee of a hotel). The non-owner inputs identification information on the portable terminal apparatus of the non-owner and the password to a server. Then, the server starts management by linking the identification information on the portable terminal apparatus of the non-owner with identification information on a portable terminal apparatus of the owner. In Japanese Patent Application Publication No. 2004-190233, a user of a car sharing service notifies a server of identification information on a portable terminal apparatus of the user, identification information on a vehicle the user requests, and duration of usage. When the vehicle is available in the duration of usage, the server transmits electronic key information to the portable terminal apparatus of the user.

However, in Japanese Patent Application Publication No. 2016-133969, if the owner fails to frequently update the password, the password propagates from a permitted third party to a non-permitted third party, enabling the non-permitted third party to use a desired portable terminal apparatus as the electronic key. In Japanese Patent Application Publication No. 2004-190233, anyone who has happened to obtain identification information on a vehicle can use a desired portable terminal apparatus as the electronic key. In either case, there remains a security problem that a portable terminal apparatus whose owner is unknown can be used as an electronic key of a vehicle.

US 2002/135466 A1 discloses a vehicle security system having an authentication server in communication with a portable device in a vehicle, which in turn is in communication with vehicle components.

JP 2004/190233 A discloses an electronic key system in which an electronic key server makes settings in accordance with input information.

US 2017/008490 discloses vehicle installations having first and second authentication means for allowing the use of a vehicle.

### SUMMARY OF THE INVENTION

In view of this, the present invention has an object to provide a terminal-vehicle linking apparatus and a related computer-readable medium capable of securely linking plural portable terminal apparatus with a registered vehicle.

This object is accomplished by the features of the independent claims.

A terminal-vehicle linking apparatus has the features of claim 1.
A terminal-vehicle linking method includes: receiving registration of a portable terminal apparatus to be used to drive a vehicle or instruct the vehicle; receiving registration of an in-vehicle apparatus mounted in the vehicle; and when authentication information received from the portable terminal apparatus of which the registration has been received coincides with authentication information transmitted in advance to the in-vehicle apparatus of which the registration has been received, determining that it is possible to drive the vehicle or instruct the vehicle on operation by using the portable terminal apparatus.

Other means will be described in the DETAILED DESCRIPTION OF THE EMBODIMENTS.

According to the present invention, it is possible to securely link a registered portable terminal apparatus with a registered vehicle.

### BRIEF DESCRIPTION OF THE DRAWINGS

FIG. 1 is a configuration diagram of a terminal-vehicle linking apparatus and the like;
FIG. 2 is an example of linkage information;
FIG. 3 is an example of terminal apparatus information;
FIG. 4 is an example of vehicle information;
FIG. 5 is a flowchart of procedures for a terminal registering process;
FIG. 6 is a flowchart of procedures for a vehicle registering process;
FIG. 7 is a flowchart of procedures for a linking process;
FIG. 8 is a flowchart of procedures for a linkage releasing process;
FIG. 9 is a flowchart of procedures for an in-vehicle apparatus ID deleting process;
FIG. 10 is a flowchart of procedures for temporarily giving rights to a portable terminal apparatus; and
FIG. 11 is a flowchart of procedures for releasing the rights temporarily given to the portable terminal apparatus.

### DETAILED DESCRIPTION OF THE EMBODIMENTS

Hereinafter, an embodiment for implementing the present invention (referred to as "the present embodiment") will be described in detail with reference to the drawings and the like. The present embodiment is an example where when an owner of a vehicle capable of automated driving or an employee of a facility who is permitted to instruct or drive the vehicle by the owner of the vehicle (for example, an employee of a hotel, or the like) instructs the vehicle using his/her own portable terminal apparatus (indicating a portable terminal apparatus of the owner when the owner instructs the vehicle or a portable terminal apparatus of the employee when the employee instructs the vehicle) as an electronic key, the electronic key is associated with the vehicle to be driven. However, the range of application of the present invention is not limited to this. The present invention can be applied for example to a case where a certain vehicle is driven by a plurality of people on a daily basis, like car sharing.

### (Terms)

The vehicle is a private or business automobile including a four-wheeled vehicle and a two-wheeled vehicle.

The electronic key is a key for a vehicle, and generally has any shape such as a card-type, biscuit-type, or cigarette case-type shape. A medium such as an IC chip embedded inside the key stores electronic information necessary for the operation of the vehicle.

The driver encompasses not only a person who drives a vehicle but also a person who gives instruction including driving to a vehicle. The person who drives a vehicle includes not only an owner who owns an automobile (including a person who is permitted to drive the vehicle by an owner of an automobile) but also a non-owner who is in position to be temporarily entrusted with a vehicle of another person. Note that a typical example of the non-owner is an employee of a hotel. An employee of a hotel, in addition to driving a vehicle within the property (a parking lot, a road, and the like) of the hotel, sometimes enters the inside of the vehicle to conduct cleaning, inspection, and the like. The owner can instruct the vehicle and the non-owner basically cannot instruct any vehicles. However, if the non-owner is given the rights to instruct the vehicle from the owner for some reason, the non-owner is also allowed to instruct the vehicle.

The portable terminal apparatus is a portable computer for use in taking, transmission and reception of e-mails, and other purposes as a "smartphone" and the like, in general. The portable terminal apparatus of the present embodiment has the same function as an electronic key. The owner instructs the vehicle while carrying his/her own portable terminal apparatus, and drives the vehicle under a certain circumstance. The non-owner also temporarily drives the vehicle while carrying his/her own portable terminal apparatus.

The in-vehicle apparatus is a computer to be mounted in a vehicle, and controls at least the locking of the door of the vehicle and the start and stop of the engine. More specifically, once detecting that the portable terminal apparatus is present around the in-vehicle apparatus itself (within a close range of approximately 1 meter), the in-vehicle apparatus acquires the identifier of the portable terminal apparatus from the medium in the portable terminal apparatus. The in-vehicle apparatus then inquires of a terminal-vehicle linking apparatus (which will be described later soon) whether the acquired identifier is genuine. Upon receipt of a reply saying that the identifier is genuine, the in-vehicle apparatus permits the driver to carry out the unlocking of the door of the vehicle, the starting of the engine, and the like. The terminal-vehicle linking apparatus is a computer that stores the identifier of the in-vehicle apparatus while linking the identifier of the in-vehicle apparatus with the identifier of the portable terminal apparatus capable of functioning as the electronic key of the vehicle.

### (Configuration of Terminal-vehicle linking apparatus and the like)

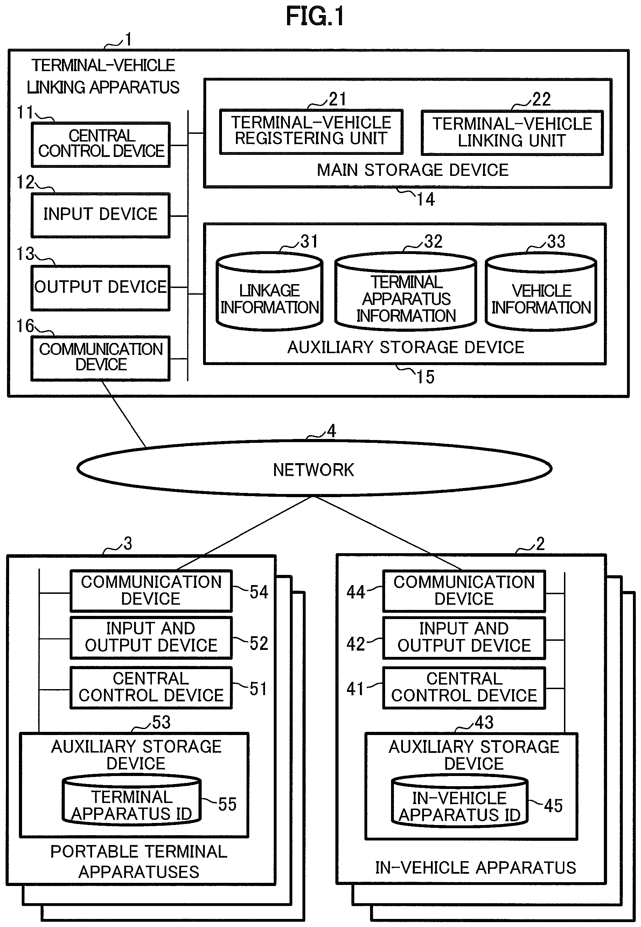

The configuration of a terminal-vehicle linking apparatus 1 and the like will be described along FIG. 1. The terminal-vehicle linking apparatus 1 is operated by a manager of a parking lot or a person who is entrusted by the manager of the parking lot (hereinafter, collectively referred to as the manager of the parking lot). The manager of a parking lot often is a hotel, a large-scale commercial facility, a multi-family building, a rail station, an airport terminal building, or the like, but also may be a car sharing company, a taxi company, a parcel delivery company, or the like. The terminal-vehicle linking apparatus 1 is normally installed in an office space near the parking lot. Alternatively, it is also possible to configure a terminal-vehicle linking function as an application on a cloud computing system, for example. In this case, the terminal-vehicle linking function can be disposed at any desired position as long as communications are possible for example on the Internet.

The terminal-vehicle linking apparatus 1 includes a central control device 11, an input device 12, an output device 13, a main storage device 14, an auxiliary storage device 15, and a communication device 16. These devices are connected together through a bus. The auxiliary storage device 15 stores linkage information 31, terminal apparatus information 32, and vehicle information 33. In the main storage device 14, a terminal-vehicle registering unit 21 and a terminal-vehicle linking unit 22 are programs. In the following description, when the acting subject is mentioned like "the OO unit do something ", this means that the central control device 11 reads out the OO unit from the auxiliary storage device 15 and loads the OO unit into the main storage device 14, and then implements the function of the OO unit (described in detail later). The terminal-vehicle linking apparatus 1 can be connected to one or a plurality of in-vehicle apparatuses 2 and one or a plurality of portable terminal apparatuses 3 through a network 4.

The in-vehicle apparatus 2 includes a central control device 41, an input and output device 42 having a display and a touch panel, an auxiliary storage device 43, and a communication device 44. These devices are connected together through a bus. In the following description, when the acting subject is mentioned like "the in-vehicle apparatus 2 do something", this means that the central control device 41 reads out a predetermined program (not illustrated) from the auxiliary storage device 43 and loads the program into a main storage device (not illustrated), and then implements the function of the program. Separately from this, the terminal-vehicle registering unit 21 and the terminal-vehicle linking unit 22 of the terminal-vehicle linking apparatus 1 also can serve as the acting subject of the in-vehicle apparatus 2 (such as causing the in-vehicle apparatus 2 to display specific information). The auxiliary storage device 43 stores an in-vehicle apparatus ID (identifier) 45, which is an identifier that uniquely identifies the in-vehicle apparatus 2. In the present embodiment, the vehicle and the in-vehicle apparatus 2 correspond to each other in a one-to-one relationship. Hence, the in-vehicle apparatus ID 45 is also an identifier that identifies the vehicle.

The portable terminal apparatus 3 includes a central control device 51, an input and output device 52 having a display and a touch panel, an auxiliary storage device 53, and a communication device 54. These devices are connected together through a bus. In the following description, when the acting subject is mentioned like "the portable terminal apparatus 3 do something", this means that the central control device 51 reads out a predetermined program (not illustrated) from the auxiliary storage device 53 and loads the program into a main storage device (not illustrated), and then implements the function of the program. Separately from this, the terminal-vehicle registering unit 21 and the terminal-vehicle linking unit 22 of the terminal-vehicle linking apparatus 1 also can serve as the acting subject of the portable terminal apparatus 3 (such as causing the portable terminal apparatus 3 to display specific information). The auxiliary storage device 53 stores a terminal apparatus ID 55, which is an identifier that uniquely identifies the portable terminal apparatus 3. In the present embodiment, the driver and the portable terminal apparatus 3 correspond to each other in a one-to-one relationship. Hence, the terminal apparatus ID 55 is also an identifier that identifies the driver.

### (Linkage Information)

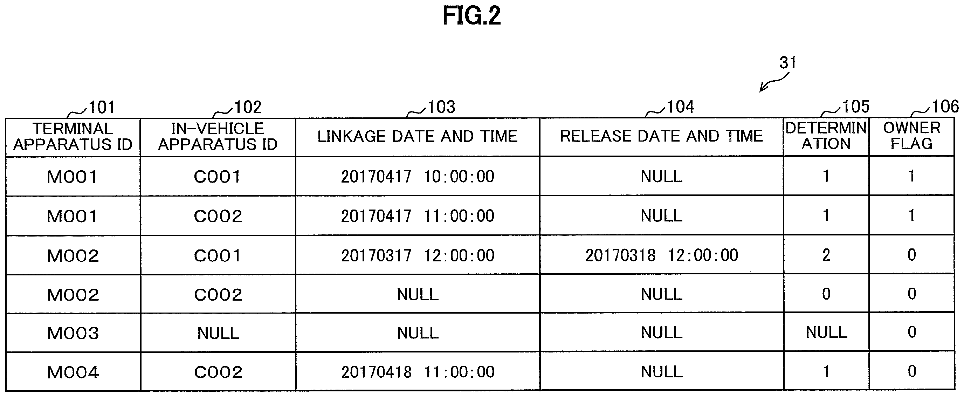

The linkage information 31 will be described along FIG. 2. In the linkage information 31, while being linked with the terminal apparatus ID stored in the terminal apparatus ID column 101, the in-vehicle apparatus ID is stored in the in-vehicle apparatus ID column 102, the linkage date and time in the linkage date and time column 103, the release date and time in the release date and time column 104, the determination flag in the determination column 105, and the owner flag in the owner column 106.

The terminal apparatus ID in the terminal apparatus ID column 101 is the aforementioned terminal apparatus ID (reference sign 55 in FIG. 1). Note that to the "first identifier", the terminal apparatus ID corresponds. In the present embodiment, the terminal apparatus IDs identify the portable terminal apparatuses used by the owner and the non-owner.

The in-vehicle apparatus ID in the in-vehicle apparatus ID column 102 is the aforementioned in-vehicle apparatus ID (reference sign 45 in FIG. 1). Note that to the "second identifier", the in-vehicle apparatus ID corresponds.

The linkage date and time in the linkage date and time column 103 is the year, month, day, hour, minute, and second when the terminal-vehicle linking apparatus 1, after issuing expiration-dated authentication information and performing authentication (described in detail later), fixedly linked the terminal apparatus ID and the in-vehicle apparatus ID with each other and registered them as one record (row) in the linkage information 31. Here, the "fixedly" or "fixed" means that it is supported by the correspondence of the expiration-dated authentication information (described in detail later).

The release date and time in the release date and time column 104 is the year, month, day, hour, minute, and second when the terminal-vehicle linking apparatus 1 released the linkage between the terminal apparatus ID and the in-vehicle apparatus ID.

Note that "NULL" indicates that no data is stored in that column of the corresponding record in the terminal apparatus ID column 101 to the release date and time column 104.

The determination flag in the determination column 105 takes one of "NULL", "0", "1", and "2". The determination flag "NULL" indicates that only the terminal apparatus ID is stored (as information other than "NULL") in the corresponding record. Such a record is hereinafter referred to also as "standby record".

The determination flag "0" indicates that the terminal apparatus ID and the in-vehicle apparatus ID are stored but the linkage date and time and the release date and time are not stored (which are "NULL") in the corresponding record. In this state, the terminal apparatus ID and the in-vehicle apparatus ID have not been fixedly linked yet. Such a record is hereinafter referred to also as "temporarily linked record".

The determination flag "1" indicates that the terminal apparatus ID, the in-vehicle apparatus ID, and the linkage date and time are stored but the release date and time is not stored (which is "NULL") in the corresponding record. In this state, the terminal apparatus ID and the in-vehicle apparatus ID are fixedly linked. Such a record is hereinafter referred to also as "fixedly linked record". At a certain point of time, the non-owner can drive the vehicle by using his/her own portable terminal apparatus 3 only when the terminal apparatus ID of the portable terminal apparatus 3 and the in-vehicle apparatus ID which identifies the in-vehicle apparatus mounted in the vehicle are stored in the fixedly linked record at this certain point of time. Note that to the "information indicating that the linkage is fixed", the determination flag "1" here corresponds.

The determination flag "2" indicates that the terminal apparatus ID, the in-vehicle apparatus ID, the linkage date and time, and the release date and time are stored in the corresponding record. In this state as well, the terminal apparatus ID and the in-vehicle apparatus ID are fixedly linked, but this is limited to the past history. Such a record is hereinafter referred to also as "released record". The transition of the determination flag on the time axis will be described later. The owner flag is an identifier indicating that it is the owner of the vehicle corresponding to the corresponding in-vehicle apparatus ID. The "0" indicates that it is a non-owner while "1" indicates that it is the owner.

### (Authentication Information)

The expiration-dated authentication information is authentication information having an expiration time. The authentication information is information for fixedly linking the terminal apparatus ID of the portable terminal apparatus 3 of the non-owner with the in-vehicle apparatus ID, and is a character string, a number string or a combination thereof, which is generated at random by terminal-vehicle linking apparatus 1 using a random number table or the like every time. Then, the expiration time is a time limit by which the terminal apparatus ID of the portable terminal apparatus 3 of the non-owner can be fixedly linked with the in-vehicle apparatus ID. This time limit is a certain constant time by which the input can be considered to be made using the portable terminal apparatus 3 after the authentication information is sent to the in-vehicle apparatus 2, for example. Although described in detail later, when the expiration-dated authentication information which the terminal-vehicle linking apparatus 1 has received from the portable terminal apparatus 3 coincides with the expiration-dated authentication information which the terminal-vehicle linking apparatus 1 has transmitted toward the in-vehicle apparatus 2, the terminal-vehicle linking apparatus 1 determines that the portable terminal apparatus 3 can function as the vehicle key of the corresponding vehicle.

### (Transition of Determination Flag)

Although some of the above description is repeated, the transition of the determination flag (the column 105 in FIG. 2) on the time axis will be described as follows in relation with the expiration-dated authentication information.
- The terminal-vehicle linking apparatus 1 sets the initial value of the determination flag to "NULL".
- The terminal-vehicle linking apparatus 1 sets the determination flag to "0" when storing the terminal apparatus ID and the in-vehicle apparatus ID in the linkage information 31 for the first time. At this stage, the linkage is not fixed.• Even after the terminal-vehicle linking apparatus 1 issues the expiration-dated authentication information to the in-vehicle apparatus 2, the terminal-vehicle linking apparatus 1 maintains the determination flag at "0". The linkage is still not fixed.
- Upon receipt of the expiration-dated authentication information from the portable terminal apparatus 3, the terminal-vehicle linking apparatus 1 determines whether the expiration-dated authentication information received coincides with the expiration-dated authentication information which the terminal-vehicle linking apparatus 1 has issued to the in-vehicle apparatus 2 in advance. As a result, if they coincide with each other, the terminal-vehicle linking apparatus 1 stores the time point of this (linkage date and time) in the linkage information 31. The terminal-vehicle linking apparatus 1 now sets the determination flag to "1" for the first time. At this stage, the linkage becomes fixed.• Upon receipt of a release request from the in-vehicle apparatus 3, the terminal-vehicle linking apparatus 1 stores the time point of this (release date and time) in the linkage information 31 and sets the determination flag to "2". At this stage, the linkage is released.

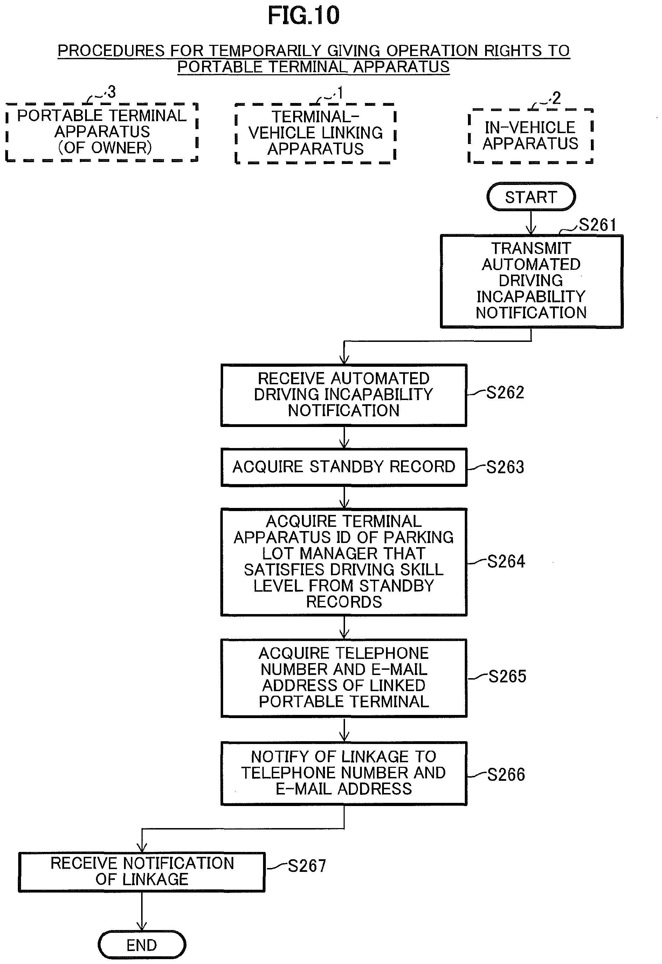

Referring to the linkage information 31 shows the followings for example.
- During the time period from 2017/03/17, 12:00:00 to 2017/03/18 12:00:00, the vehicle (the in-vehicle apparatus) C001 was in a state where the non-owner who carries the portable terminal apparatus M002 is allowed to drive the vehicle within the parking lot (the record in the third row). At this moment, the vehicle C001 will not be manually driven by the non-owner any more.
- During the time period from 2017/04/17, 10:00:00 up to this moment, the vehicle C001 has been in a state where the owner who carries the portable terminal apparatus M001 has been allowed to instruct the vehicle or drive the vehicle within the parking lot (the record in the first row).
- During the time period from 2017/04/17, 11:00:00 up to this moment, the vehicle C002 has been in a state where the owner who carries the portable terminal apparatus M001 has been allowed to instruct the vehicle or drive the vehicle within the parking lot (the record in the second row).
- During the time period from 2017/04/18, 11:00:00 up to this moment, the vehicle C002 has been such that the non-owner who carries the portable terminal apparatus M004 has been allowed to unlock the key of the automobile, to instruct the automobile to run, and to do other things (the record in the sixth row). Such a state is necessary when an owner gives the rights to instruct the vehicle to a non-owner as in the case where the vehicle (C002) corresponding to the record in the second row has transitioned to a state of being incapable of automated drive during running within the parking lot, for example. Meanwhile, the giving of the rights will be specifically described with FIG. 10 described later.

### (Terminal Apparatus Information)

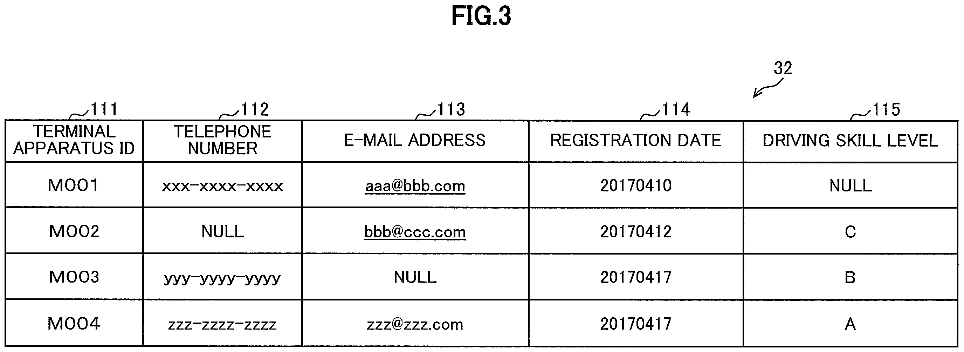

The terminal apparatus information 32 will be described along FIG. 3. In the terminal apparatus information 32, while being linked with the terminal apparatus ID stored in the terminal apparatus ID column 111, the telephone number is stored in the telephone number column 112, the e-mail address in the e-mail address column 113, the registration date in the registration date column 114, and the driving skill level in the driving skill level column 115.

The terminal apparatus ID in the terminal apparatus ID column 111 is the aforementioned terminal apparatus ID (reference sign 55 in FIG. 1).

The telephone number in the telephone number column 112 is a telephone number when the portable terminal apparatus 3 is used as a cell phone.

The e-mail address in the e-mail address column 113 is an e-mail address when the portable terminal apparatus 3 is used as a transmitter and receiver for e-mails.

The registration date in the registration date column 114 is the year, month, and day when the record (row) was stored in the terminal apparatus information 32.

The driving skill level in the driving skill level column 115 represents the driving skill level of a person who possesses the terminal apparatus ID. When the terminal apparatus ID is of an owner, NULL is permitted, while when the terminal apparatus ID is of a parking lot manager, NULL is not permitted but the driving skill level of the parking lot manager needs to be inputted in the driving skill level column 115. This item is used for judgment in allocating an appropriate one out of people in charge in the parking lot manager as the driver when the vehicle which has become incapable of automated drive within the parking lot is to be manually driven temporarily.

In the terminal apparatus information 32, it is necessary that at least an identifier which uniquely identify the portable terminal apparatus 3 and a registration date should be stored. The telephone number and the e-mail address also can be said to be such identifiers. Accordingly, it is enough that at least one of the telephone number, the e-mail address, and terminal apparatus ID other than these (for example, a number automatically given by the terminal-vehicle linking apparatus 1) be stored in the terminal apparatus information 32. Moreover, the terminal-vehicle linking apparatus 1 may use the serial number, the IMEI (International Mobile Equipment Identifier), or the like of the portable terminal apparatus 3 instead of newly numbering the terminal apparatus ID.

### (Vehicle Information)

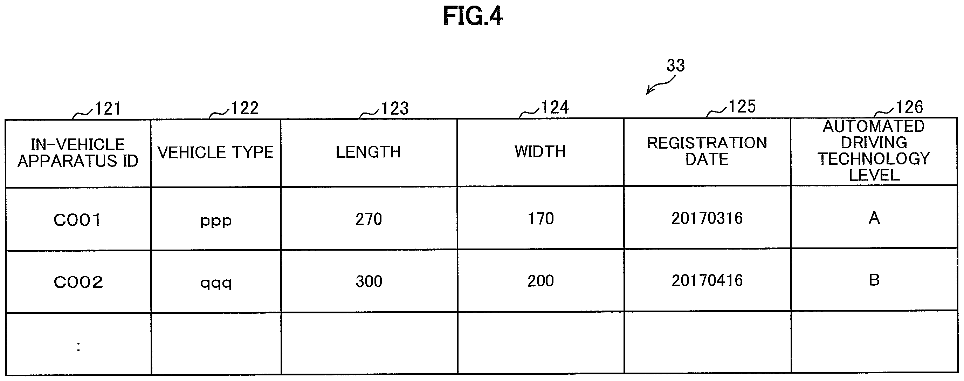

The vehicle information 33 will be described along FIG. 4. In the vehicle information 33, while being linked with the in-vehicle apparatus ID stored in the in-vehicle apparatus ID column 121, the vehicle type is stored in the vehicle type column 122, the length in the length column 123, the width in the width column 124, the registration date in the registration date column 125, and the automated driving technology level in the automated driving technology level column 126.

The in-vehicle apparatus ID in the in-vehicle apparatus ID column 121 is the aforementioned in-vehicle apparatus ID (reference sign 45 in FIG. 1).

The vehicle type in the vehicle type column 122 is the type of the vehicle. The type of the vehicle may be a size category such as a small vehicle or a large vehicle, or may be a use category such as a passenger vehicle or a truck, or may be a license category required for driving the vehicle.

The length in the length column 123 is a longitudinal length of the vehicle (unit: cm).

The width in the width column 124 is the width of the vehicle (unit: cm).

The registration date in the registration date column 125 is the year, month, and day when the corresponding record (row) was stored in the vehicle information 33.

The automated driving technology level in the automated driving technology level column 126 is the capability of the automated drive (the technology level of the automated drive).

Depending on the structure of the parking lot, the parking space for a large vehicle, for example, is limited. In addition, depending on the vehicle type, it is sometimes required for a non-owner to have a sophisticated driving skill. Moreover, depending on the automated drive function of an automated vehicle, there could be a case where the automated vehicle can be parked in only a particular garage. Accordingly, it is possible to store various kinds of information that are useful for determining the easiness in parking, such as the non-owner who drives the vehicle and the selecting of a space for parking the vehicle, instead of or in addition to the vehicle type and the lengths.

### (Procedures for Terminal Registering Process)

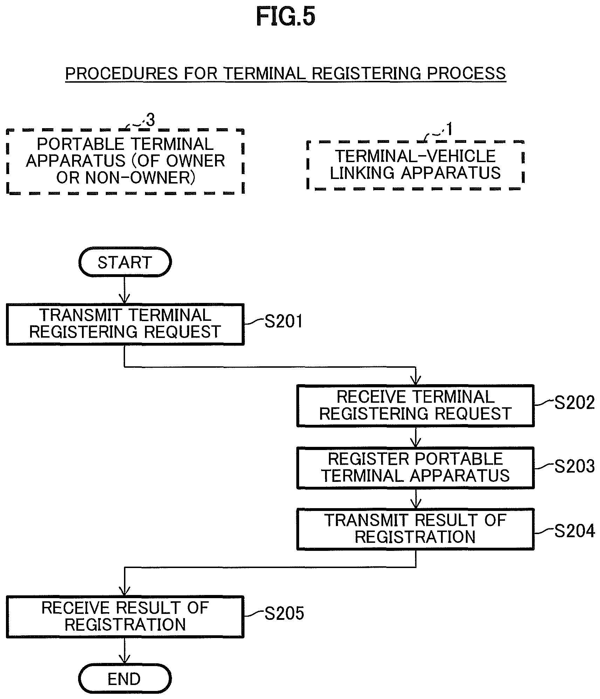

The procedures for a terminal registering process will be described along FIG. 5.

In Step S201, the portable terminal apparatus 3 of the owner transmits a terminal registering request. Specifically, the portable terminal apparatus 3 transmits the terminal registering request together with the terminal apparatus ID (reference sign 55 in FIG. 1), the telephone number, and the e-mail address of the portable terminal apparatus 3, and information that identifies whether it is the owner registration, to the terminal-vehicle linking apparatus 1. Although the portable terminal apparatus of the owner is described as an example here, the portable terminal of a non-owner can also be registered in the same manner.

In Step S202, the terminal-vehicle registering unit 21 of the terminal-vehicle linking apparatus 1 receives the terminal registering request. Specifically, the terminal-vehicle registering unit 21 receives the terminal registering request together with the terminal apparatus ID, the telephone number, the e-mail address, and the information that identifies whether it is the owner registration, from the portable terminal apparatus 3.

In Step S203, the terminal-vehicle registering unit 21 of the terminal-vehicle linking apparatus 1 registers the portable terminal apparatus 3. Specifically, first, the terminal-vehicle registering unit 21 create a new record for linkage information 31 (FIG. 2), and stores the terminal apparatus ID, received in Step S202, into the terminal apparatus ID column 101. Then, the terminal-vehicle registering unit 21 stores "NULL" into the in-vehicle apparatus ID column 102, the linkage date and time column 103, the release date and time column 104, and the determination column 105 of the new record. The terminal-vehicle registering unit 21 registers "1" in the owner flag in the case of the owner registration or "0" in the other cases. The record created here is a standby record.

Secondly, the terminal-vehicle registering unit 21 creates a new record for the terminal apparatus information 32 (FIG. 3), and stores the terminal apparatus ID, the telephone number, and the e-mail address, received in Step S202, into the terminal apparatus ID column 111, the telephone number column 112, and the e-mail address column 113. Then, the terminal-vehicle registering unit 21 stores the current year, month, and day into the registration date column 114 of the new record.

In Step S204, the terminal-vehicle registering unit 21 of the terminal-vehicle linking apparatus 1 transmits a result of registration. The result of registration is a result of whether the terminal-vehicle linking apparatus 1 has been successfully registered in the terminal apparatus information and the linkage information of the record.

In Step S205, the portable terminal apparatus 3 receives the result of registration. Specifically, first, the portable terminal apparatus 3 receives the result of registration from the terminal-vehicle linking apparatus 1.

Secondly, the portable terminal apparatus 3 displays the result of registration on the input and output device 52, and thereafter ends the procedures for a terminal registering process.

### (Procedures for Vehicle Registering Process)

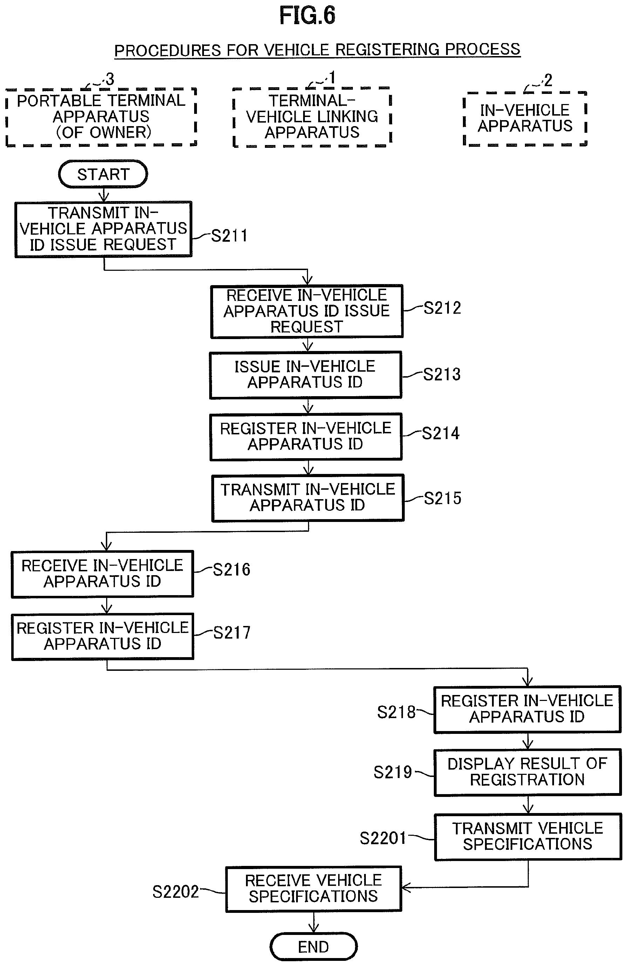

The procedures for a vehicle registering process will be described along FIG. 6. The owner requests the terminal-vehicle linking apparatus 1 to issue the in-vehicle apparatus ID by using the portable terminal apparatus 3 of the owner.

In Step S211, the portable terminal apparatus 3 (of the owner) transmits an in-vehicle apparatus ID issue request. Specifically, the portable terminal apparatus 3 transmits the in-vehicle apparatus ID issue request to the terminal-vehicle linking apparatus 1.

In Step S212, the terminal-vehicle registering unit 21 of the terminal-vehicle linking apparatus 1 receives the in-vehicle apparatus ID issue request. Specifically, the terminal-vehicle registering unit 21 receives the in-vehicle apparatus ID issue request together with the terminal apparatus ID from the portable terminal apparatus 3.

In Step S213, the terminal-vehicle registering unit 21 of the terminal-vehicle linking apparatus 1 issues the in-vehicle apparatus ID. At this time, the terminal-vehicle registering unit 21 newly creates a unique identifier. Of course, the terminal-vehicle registering unit 21 may use an existing vehicle identification number such as a license plate number as the in-vehicle apparatus ID. However, from the viewpoint of ensuring the security, it is more desirable that the terminal-vehicle registering unit 21 should create a random character string or the like by using a random number table or the like.

In Step S214, the terminal-vehicle registering unit 21 of the terminal-vehicle linking apparatus 1 registers the in-vehicle apparatus ID. Specifically, first, the terminal-vehicle registering unit 21 acquires a record that corresponds to the terminal apparatus ID received in Step S212 from the linkage information 31 (FIG. 2).

Secondly, the terminal-vehicle registering unit 21 confirms that the owner flag of the received record is "1" and then sets the determination flag to "0".

Thirdly, the terminal-vehicle registering unit 21 acquires the standby record in which the owner flag is "1" from the linkage information 31 (FIG. 2). Then, the terminal-vehicle registering unit 21 stores the in-vehicle apparatus ID created in Step S213 into the in-vehicle apparatus ID column 102 of the standby record and stores "0" into the determination column 105, thereby changing the standby record to a temporarily linked record.

Fourthly, the terminal-vehicle registering unit 21 creates a new record for the vehicle information 33 (FIG. 4), stores the in-vehicle apparatus ID, issued in Step S213, into the in-vehicle apparatus ID column 121, and further stores the vehicle type and the length of the vehicle, received in Step S212, into the vehicle type column 122 and the length column 123 as necessary. Then, the terminal-vehicle registering unit 21 stores the current year, month, and day into the registration date column 125 of the new record.

In Step S215, the terminal-vehicle registering unit 21 of the terminal-vehicle linking apparatus 1 transmits the in-vehicle apparatus ID. Specifically, the terminal-vehicle registering unit 21 transmits the in-vehicle apparatus ID, issued in Step S213, to the portable terminal apparatus 3. In Step S216, the portable terminal apparatus 3 receives the in-vehicle apparatus ID. Specifically, the portable terminal apparatus 3 receives the in-vehicle apparatus ID, issued in Step S213, from the terminal-vehicle linking apparatus 1.

In Step S217, the portable terminal apparatus 3 registers the in-vehicle apparatus ID. Specifically, the portable terminal apparatus 3 stores the in-vehicle apparatus ID, received in Step S216, into the auxiliary storage device 53.

In Step S218, the in-vehicle apparatus 2 registers the in-vehicle apparatus ID. Specifically, the in-vehicle apparatus 2 may receive the in-vehicle apparatus ID through any of the following method 1, method 2, and method 3, for example.
<Method 1> The owner visually checks the in-vehicle apparatus ID displayed on the input and output device 52 of the portable terminal apparatus 3 and manually inputs the in-vehicle apparatus ID into the in-vehicle apparatus 2 through the input and output device 42.
<Method 2> The portable terminal apparatus 3 transmits the in-vehicle apparatus ID to the in-vehicle apparatus 2 through the network 4.
<Method 3> The portable terminal apparatus 3 transmits the in-vehicle apparatus ID to the in-vehicle apparatus 2 by using a communication technology such as short-range wireless other than the network 4.

The method 1 is a method that imposes a burden on the owner but has a higher security in that the owner has to ride the vehicle and operate the in-vehicle apparatus 3.

In Step S219, the in-vehicle apparatus 2 displays a result of registration. Specifically, the in-vehicle apparatus 2 displays a result of whether the record created in the "fourthly" section in Step S214 has been successfully registered, on the input and output device 42.

In Step S2201, the in-vehicle apparatus 2 transmits information on the specifications of the automobile in which the in-vehicle apparatus 2 is mounted to the terminal-vehicle linking apparatus 1. The information on the specifications is the length, width, vehicle type, and the like necessary for the automated valet parking. The information on the specifications to be transmitted is supposed to be set up between the in-vehicle apparatus and the terminal-vehicle linking apparatus in advance. However, it is possible to employ a configuration that limited information such as vehicle type is transmitted, if information necessary for automated valet parking can be acquired from a catalogue spec and the like.

In Step S2202, the terminal-vehicle linking apparatus 1 receives the information on the specifications of the automobile from the in-vehicle apparatus 2. The terminal-vehicle registering unit 21 of the terminal-vehicle linking apparatus 1 stores the received information into the record corresponding to the in-vehicle apparatus ID of the vehicle information 33.

Thereafter, the procedures for a vehicle registering process are ended.

### (Procedures for Linking Process)

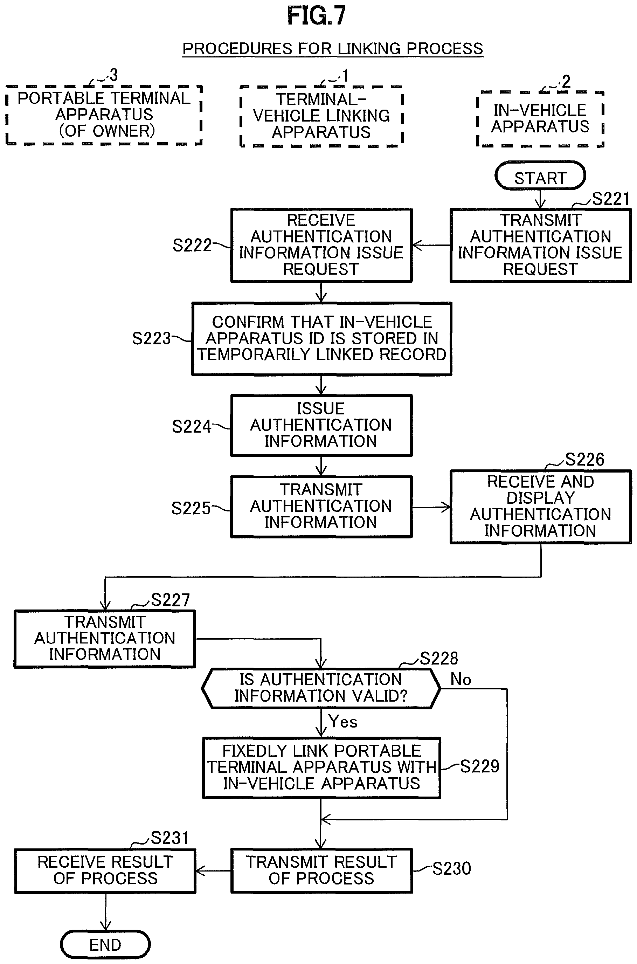

The procedures for a linking process will be described along FIG. 7. Here, the description will be made on the assumption that the owner has ridden the vehicle and activated the in-vehicle apparatus 2.

In Step S221, the in-vehicle apparatus 2 transmits an authentication information issue request. Specifically, the in-vehicle apparatus 2 transmits the authentication information issue request which requests for expiration-dated authentication information together with the in-vehicle apparatus ID received in Step S218 to the terminal-vehicle linking apparatus 1. At this time, the owner operates the input and output device 42 of the in-vehicle apparatus 2 to transmit the authentication information issue request while driving the vehicle.

In Step S222, the terminal-vehicle linking unit 22 of the terminal-vehicle linking apparatus 1 receives the authentication information issue request. Specifically, the terminal-vehicle linking unit 22 receives the authentication information issue request together with the in-vehicle apparatus ID from the in-vehicle apparatus 2.

In Step S223, the terminal-vehicle linking unit 22 of the terminal-vehicle linking apparatus 1 confirms that the in-vehicle apparatus ID is stored in the temporarily linked record. Specifically, the terminal-vehicle linking unit 22 searches the linkage information 31 (FIG. 2) by using the in-vehicle apparatus ID received in Step S222 as a search key, and confirms that the determination flag of the corresponding record is "0". Here, when the confirmation cannot be made, the terminal-vehicle linking unit 22 ends the procedures for a linking process (not illustrated as a flowchart).

In Step S224, the terminal-vehicle linking unit 22 of the terminal-vehicle linking apparatus 1 issues authentication information. Specifically, first, the terminal-vehicle linking unit 22 determines the expiration time based on the following example.

### <Example> Time by which input can be made from the portable terminal apparatus immediately after the expiration time information is transmitted

Secondly, the terminal-vehicle linking unit 22 creates a character string, a number string, or a combination thereof at random by using a random number table or the like, as authentication information. Then, the terminal-vehicle linking unit 22 adds the expiration time determined in "first" of Step S224 to the authentication information, thereby creating expiration-dated authentication information.

In Step S225, the terminal-vehicle linking unit 22 of the terminal-vehicle linking apparatus 1 transmits the authentication information. Specifically, the terminal-vehicle linking unit 22 transmits the expiration-dated authentication information to the in-vehicle apparatus 2.

In Step S226, the in-vehicle apparatus 2 receives and displays the authentication information. Specifically, the in-vehicle apparatus 2 receives the expiration-dated authentication information from the terminal-vehicle linking apparatus 1. Then, the in-vehicle apparatus 2 stores the expiration-dated authentication information into the auxiliary storage device 43 and also displays the expiration-dated authentication information on the input and output device 42.

In Step S227, the portable terminal apparatus 3 transmits the authentication information. Specifically, the portable terminal apparatus 3 transmits the authentication information displayed in Step S226 and the terminal apparatus ID to the terminal-vehicle linking apparatus 1. At this time, the portable terminal apparatus 3 may receive the expiration-dated authentication information through any of the following method 4, method 5, and method 6, for example.

<Method 4> The owner visually checks the expiration-dated authentication information displayed on the input and output device 42 of the in-vehicle apparatus 2 and manually inputs the expiration-dated authentication information into the input and output device 52.
<Method 5> The in-vehicle apparatus 2 transmits the expiration-dated authentication information to the portable terminal apparatus 3 through the network 4.
<Method 6> The in-vehicle apparatus 2 transmits the expiration-dated authentication information to the in-vehicle apparatus 2 by using a communication technology such as short-range wireless other than the network 4.

The method 4 is a method that imposes a burden on the owner but has a higher security in that the owner directly inputs the expiration-dated authentication information into the portable terminal apparatus 3.

In Step S228, the terminal-vehicle linking unit 22 of the terminal-vehicle linking apparatus 1 determines whether the authentication information is valid. Specifically, first, the terminal-vehicle linking unit 22 receives the expiration-dated authentication information from the portable terminal apparatus 3.

Secondly, the terminal-vehicle linking unit 22 proceeds to Step S229 if the following condition 1, condition 2, and condition 3 are simultaneously satisfied ("Yes" in Step S228) or proceeds to Step S230 in the other cases ("No" in Step S228).

<Condition 1> The current time is not beyond the expiration time of the expiration-dated authentication information received from the portable terminal apparatus 3 in "first" of Step S228.
<Condition 2> The authentication information of the expiration-dated authentication information received from the portable terminal apparatus 3 in "first" of Step S228 coincides with the authentication information of the expiration-dated authentication information transmitted to the in-vehicle apparatus 2 in Step S225.
<Condition 3> The terminal apparatus ID received from the portable terminal apparatus 3 in "first" of Step S228 coincides with the terminal apparatus ID corresponding to the record in which the owner flag is "1" and the in-vehicle apparatus ID is the in-vehicle apparatus ID for which the authentication information has been transmitted in Step S227 among the records of the linkage information 31.

In Step S229, the terminal-vehicle linking unit 22 of the terminal-vehicle linking apparatus 1 fixedly links the portable terminal apparatus 3 with the in-vehicle apparatus 2. Specifically, the terminal-vehicle linking unit 22 stores the current year, month, day, hour, minute, and second into the linkage date and time column 103 of the temporarily linked record and stores "1" into the determination column 105, thereby changing the temporarily linked record to a fixedly linked record.

At this stage, the terminal-vehicle linking unit 22 determines that "the owner who uses the portable terminal apparatus 3 identified by the terminal apparatus ID of the fixedly linked record may instruct the vehicle on which the in-vehicle apparatus 2 identified by the in-vehicle apparatus ID of the fixedly linked record is mounted."

In Step S230, the terminal-vehicle linking unit 22 of the terminal-vehicle linking apparatus 1 transmits a result of the process. Specifically, the terminal-vehicle linking unit 22 transmits the following information to the portable terminal apparatus 3 as the result of the process.
<When the process has passed through "Yes" in Step S228> The content of the record of the vehicle information 33 having the in-vehicle apparatus ID in the fixedly linked record and a first message saying that "You can instruct this vehicle for automated valet parking."
<When the process has passed through "No" in Step S228> A second message saying that "The authentication information you transmitted is beyond the expiration time" or that "The authentication information you transmitted is wrong authentication information."

In Step S231, the portable terminal apparatus 3 receives the result of the process. Specifically, the portable terminal apparatus 3 receives the result of the process transmitted in Step S230 from the terminal-vehicle linking apparatus 1, and displays the result of the process on the input and output device 52. Thereafter, the portable terminal apparatus 3 ends the procedures for a linking process. As long as the fixedly linked record is stored in the linkage information 31 (FIG. 2), the owner who uses the portable terminal apparatus 3 identified by the terminal apparatus ID of the fixedly linked record can drive the vehicle in which the in-vehicle apparatus 2 identified by the in-vehicle apparatus ID is mounted or instruct the vehicle for operation. Specifically, when the owner is permitted to drive the vehicle, the owner is given the rights of the electronic key while when the owner is permitted to instruct the vehicle for operation, the owner is given the rights of instruction.

### (Procedures for Linkage Releasing Process)

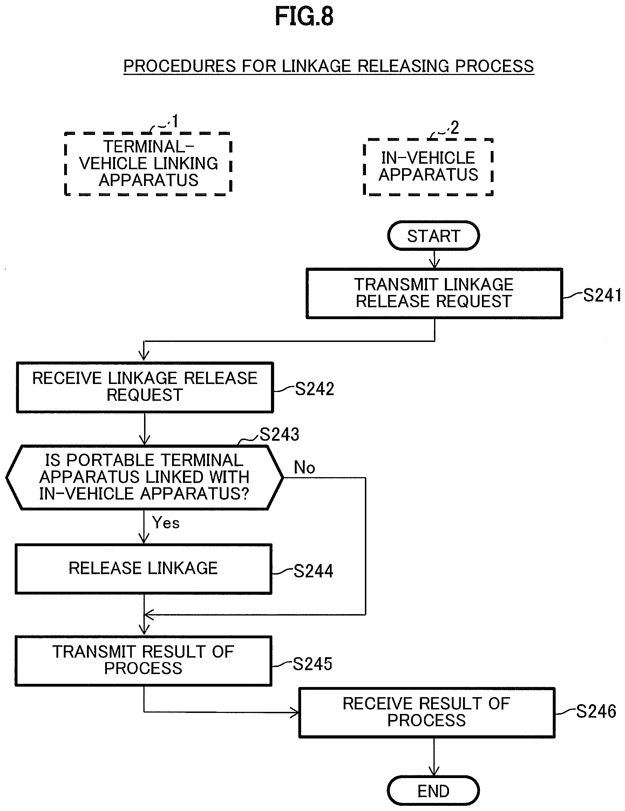

The procedures for a linkage releasing process will be described along FIG. 8.

In Step S241, the in-vehicle apparatus 2 transmits a linkage release request. Specifically, the in-vehicle apparatus 2 transmits the linkage release request which is a request for releasing the linkage between the terminal apparatus ID and the in-vehicle apparatus ID together with the in-vehicle apparatus ID to the terminal-vehicle linking apparatus 1.

In Step S242, the terminal-vehicle linking unit 22 of the terminal-vehicle linking apparatus 1 receives the linkage release request. Specifically, the terminal-vehicle linking unit 22 receives the linkage release request together with the in-vehicle apparatus ID from the in-vehicle apparatus 2. At this time, the terminal-vehicle linking unit 22 confirms that the linkage release request is from the owner by using the portable terminal apparatus of the owner or the like (not illustrated as a flowchart).

In Step S243, the terminal-vehicle linking unit 22 of the terminal-vehicle linking apparatus 1 determines whether the portable terminal apparatus 3 is linked with the in-vehicle apparatus 2. Specifically, if there is a record that simultaneously satisfies the following condition 4 and condition 5 in the linkage information 31 (FIG. 2) ("Yes" in Step S243), the terminal-vehicle linking unit 22 proceeds to Step S244 while holding the record. In the other cases ("No" in Step S243), the terminal-vehicle linking unit 22 proceeds to Step S245.
<Condition 4> The in-vehicle apparatus ID received in Step S242 is stored in the in-vehicle apparatus ID column 102.
<Condition 5> "1" is stored in the determination column 105.

In Step S244, the terminal-vehicle linking unit 22 of the terminal-vehicle linking apparatus 1 releases the linkage. Specifically, the terminal-vehicle linking unit 22 stores the current year, month, day, hour, minute, and second into the release date and time column 104 of the record held in Step S243 and stores "2" into the determination column 105 (changing the fixedly linked record to a released record).

In Step S245, the terminal-vehicle linking unit 22 of the terminal-vehicle linking apparatus 1 transmits a result of the process. Specifically, the terminal-vehicle linking unit 22 transmits the following information to the in-vehicle apparatus 2 as the result of the process.
<When the process has passed through "Yes" in Step S243> A third message saying that "The linkage between your vehicle and portable terminal apparatus has now been released."
<When the process has passed through "No" in Step S243> A fourth message saying that "The linkage between your vehicle and portable terminal apparatus has already been released."

In Step S246, the in-vehicle apparatus 2 receives the result of the process. Specifically, the in-vehicle apparatus 2 receives the result of the process transmitted in Step S245 from the terminal-vehicle linking apparatus 1 and displays the result of the process on the input and output device 42. Thereafter, the procedures for a linkage releasing process are ended. Note that the procedures for a linkage releasing process may be executed at a timing other than that when the owner departs from the hotel.

### (Procedures for In-vehicle Apparatus ID Deleting Process)

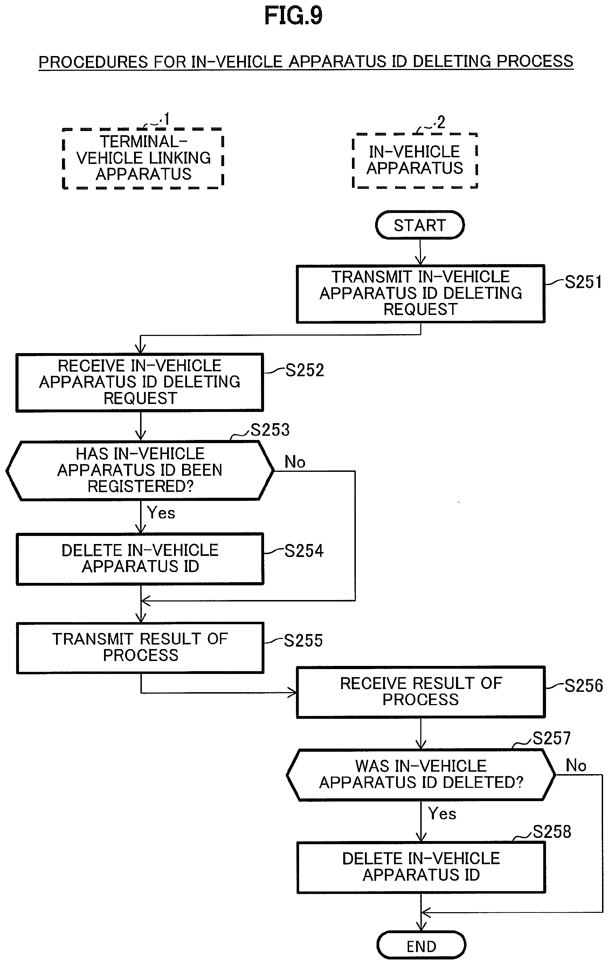

The procedures for an in-vehicle apparatus ID deleting process will be described along FIG. 9. Now, assume that the owner has decided to no longer utilize the valet parking.

In Step S251, the in-vehicle apparatus 2 transmits an in-vehicle apparatus ID deleting request. Specifically, the in-vehicle apparatus 2 transmits the in-vehicle apparatus ID deleting request, which is a request for deleting the in-vehicle apparatus ID, together with the in-vehicle apparatus ID to the terminal-vehicle linking apparatus 1.

In Step S252, the terminal-vehicle linking unit 22 of the terminal-vehicle linking apparatus 1 receives the in-vehicle apparatus ID deleting request. Specifically, the terminal-vehicle linking unit 22 receives the in-vehicle apparatus ID deleting request together with the in-vehicle apparatus ID from the in-vehicle apparatus 2. At this time, the terminal-vehicle linking unit 22 confirms that the deleting request is from the owner by using the portable terminal apparatus of the owner or the like.

In Step S253, the terminal-vehicle linking unit 22 of the terminal-vehicle linking apparatus 1 determines whether the in-vehicle apparatus ID has been registered. Specifically, if there is a record containing the in-vehicle apparatus ID received in Step S252 in the linkage information 31 (FIG. 2) ("Yes" in Step S253), the terminal-vehicle linking unit 22 proceeds to Step S254. In the other cases ("No" in Step S253), the terminal-vehicle linking unit 22 proceeds to Step S255.

In Step S254, the terminal-vehicle linking unit 22 of the terminal-vehicle linking apparatus 1 deletes the in-vehicle apparatus ID. Specifically, first, the terminal-vehicle linking unit 22 deletes the record containing the in-vehicle apparatus ID received in Step S252 from the linkage information 31 (FIG. 2).

Secondly, the terminal-vehicle linking unit 22 deletes the record containing the in-vehicle apparatus ID received in Step S252 from the vehicle information 33 (FIG. 4).

In Step S255, the terminal-vehicle linking unit 22 of the terminal-vehicle linking apparatus 1 transmits a result of the process. Specifically, the terminal-vehicle linking unit 22 transmits the following information to the in-vehicle apparatus 2 as the result of the process.
<When the process has passed through "Yes" in Step S253> A fifth message saying that "The hotel has deleted the registration of your vehicle."
(When the process has passed through "No" in Step S253> A sixth message saying that "Your vehicle has not been registered in the hotel."

In Step S256, the in-vehicle apparatus 2 receives the result of the process. Specifically, the in-vehicle apparatus 2 receives the result of the process transmitted in Step S255 from the terminal-vehicle linking apparatus 1 and displays the result of the process on the input and output device 42.

In Step S257, the in-vehicle apparatus 2 determines whether the in-vehicle apparatus ID was deleted. Specifically, if the result of the process received in Step S256 is the fifth message ("Yes" in Step S257), the in-vehicle apparatus 2 proceeds to Step S258. If the result of the process received in Step S256 is the sixth message ("No" in Step S257), the in-vehicle apparatus 2 ends the procedures for an in-vehicle apparatus ID deleting process.

In Step S258, the in-vehicle apparatus 2 deletes the in-vehicle apparatus ID. Specifically, the in-vehicle apparatus 2 deletes the in-vehicle apparatus ID from the auxiliary storage device 43. Thereafter, the in-vehicle apparatus 2 ends the procedures for an in-vehicle apparatus ID deleting process. Note that the procedures for an in-vehicle apparatus ID deleting process may be executed at a timing other than that when the owner decided to no longer utilize the valet parking. Such other timing includes a timing when the owner gave up the vehicle.

### (Temporal Giving of Operation Rights to Parking Lot Manager in Emergency)

The procedures for giving the operation rights of the vehicle to a parking lot manager in an emergency will be described along FIG. 10. There would be a case where when the vehicle instructed to perform automated valet parking is running within the parking lot, the automated driving becomes difficult due to failure of a device in the vehicle, and the like, and it becomes necessary for the vehicle to be temporarily driven manually by a parking lot manager.

In Step S261, the vehicle itself determines that the automated driving has become difficult to be continued, and notifies the terminal-vehicle linking apparatus 1 through the in-vehicle apparatus 2. Specifically, the vehicle notifies the terminal-vehicle linking apparatus 1 of the in-vehicle apparatus ID of the auxiliary storage device 43 of the in-vehicle apparatus 2.

In Step S262, the terminal-vehicle linking apparatus 1 receives the automated driving incapability notification from the vehicle. Specifically, the terminal-vehicle linking apparatus 1 receives the in-vehicle apparatus ID identifying the vehicle which has been designated in Step S261.

In Step S263, the terminal-vehicle linking apparatus 1 acquires a standby record from the linkage information 31. Specifically, the terminal-vehicle linking apparatus 1 acquires a standby record in which the owner flag is "0" (the portable terminal apparatus of the parking lot manager) from the linkage information 31.

The number of the standby records in which the owner flag is "0" is not necessarily one because normally a plurality of non-owners exist in a hotel. In view of this, the terminal-vehicle registering unit 21 may arrange a plurality of standby records in a certain order and select the leading standby record as a temporarily linked record such that the loads on the non-owners become equal. Alternatively, when giving the operation rights of the vehicle to some non-owners among a plurality of non-owners, the terminal-vehicle registering unit 21 may use information on the driving skills of the plurality of non-owner stored in advance to determine a portable terminal apparatus to be given the operation rights. Moreover, when determining a portable terminal apparatus to be given the operation rights, the terminal-vehicle registering unit 21 may use any of information on the vehicle type or length of the vehicle to be operated and information on the parking space.

In particular, it is desirable that a non-owner having a low driving skill should not drive a vehicle that is difficult to be driven, or not allocated to park a vehicle at a difficult parking space such as a parallel parking space. In this case, the terminal-vehicle registering unit 21 may cross-check the vehicle type and the length of the vehicle received in Step S212 with driving skills of non-owners stored in advance and select a standby record of a non-owner who is most suitable for driving the vehicle as a temporarily linked record. Besides, the difficulty in parking should include dynamic information such as information that an adjacent vehicle is large in size, information that a vehicle is parked to be sticking out, and the like. Accordingly, it is also possible to determine a portable terminal apparatus to be given the operation rights, considering information on a vehicle adjacent to a space to park (such as the vehicle type and the position where the vehicle is parked).

In Step S264, the terminal-vehicle linking apparatus 1 acquires the terminal apparatus ID that satisfies the driving skill level of the terminal apparatus information 32 from terminal apparatus IDs of the standby records acquired in Step S263.

In Step S265, the terminal-vehicle linking apparatus 1 searches the terminal apparatus information 32 using a terminal apparatus ID 111 subjected to the linking process as a key, thereby acquiring the telephone number 112 and the e-mail address 113.

In Step S266, the terminal-vehicle linking apparatus 1 notifies the portable terminal apparatus 3 (of the non-owner) that the standby record has been linked with the vehicle through the telephone number and the e-mail address acquired in Step S263.

In Step S267, the portable terminal apparatus 3 of the parking lot manager receives the e-mail saying that the linking process has been completed. Thereafter, the procedures for temporarily giving the rights to a portable terminal apparatus are ended. The ending enables an instruction to unlock the doors of the vehicle to be sent.

When the manager of the parking lot is temporarily given the operation rights in this process, a process for sending a request to give the rights may be performed to the terminal of the owner (not illustrated as a flowchart).

### (Procedures for Releasing Operation Rights given to Parking Lot Manager)

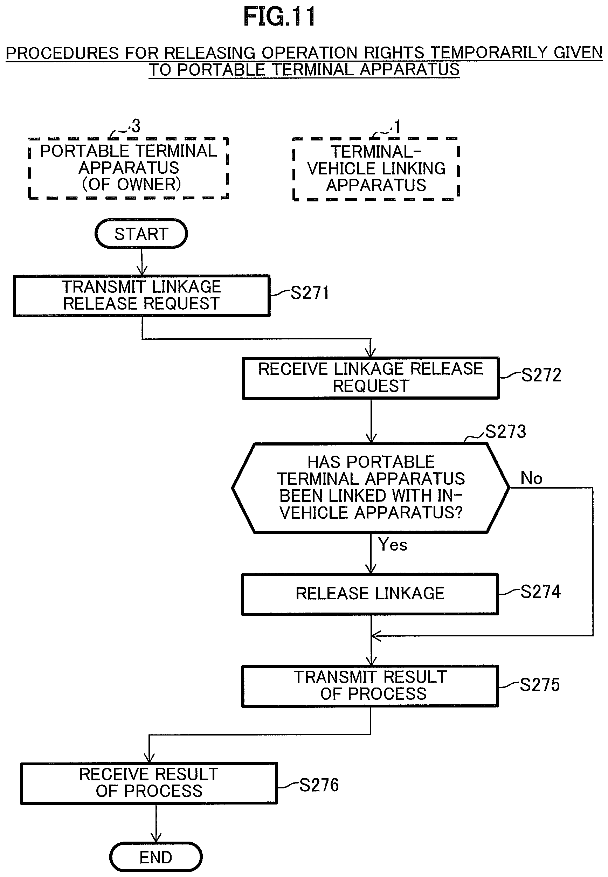

Procedures for releasing the operation rights temporarily linked with the parking lot manager will be described using FIG. 11.

In Step S271, a linkage release request is transmitted from the portable terminal apparatus 3 (of the owner) to the terminal-vehicle linking apparatus 1. Specifically, the terminal apparatus ID 55 of the portable terminal apparatus 3 is transmitted.

In Step S272, the terminal-vehicle linking apparatus 1 receives the linkage release request. Specifically, the terminal-vehicle linking apparatus 1 receives the terminal apparatus ID 55 of the portable terminal apparatus 3 transmitted from the portable terminal apparatus 3 (of the owner).

In Step S273, the terminal-vehicle linking unit 22 of the terminal-vehicle linking apparatus 1 determines whether the portable terminal apparatus (of the non-owner) has been linked with the in-vehicle apparatus. Specifically, if there is a record that simultaneously satisfies the following condition 6 and condition 7 in the linkage information 31 (FIG. 2) ("Yes" in Step 273), the terminal-vehicle linking unit 22 proceeds to Step S274 while holding the corresponding record. In the other cases ("No" in Step S273), the terminal-vehicle linking unit 22 proceeds to Step S275.
<Condition 6> A record in which the owner flag is "0" among records having in-vehicle apparatus ID corresponding to the terminal apparatus ID (of the owner).
<Condition 7> A record in which the determination flag is "1" among them satisfies the condition 6.

In Step S274, the terminal-vehicle linking unit 22 of the terminal-vehicle linking apparatus 1 releases the linkage. Specifically, the terminal-vehicle linking unit 22 stores the current year, month, day, hour, minute, and second into the release date and time column 104 of the record held in Step S273 and stores "2" into the determination column 105 of the record (changes the fixedly linked record to the released record).

In Step S275, the terminal-vehicle linking unit 22 of the terminal-vehicle linking apparatus 1 transmits a result of the process. Specifically, the terminal-vehicle linking unit 22 transmits the following information to the in-vehicle apparatus 3 as the result of the process.
<When the process has passed through "Yes" in Step S273> A seventh message saying that "The linkage between the portable terminal of the parking lot manager and your vehicle has now been released."
<When the process has passed through "No" in Step S274> An eighth message saying that "Your vehicle has not been linked with the portable terminal of the parking lot manager."

In Step S276, the portable terminal apparatus 3 (of the owner) receives the result of the process. Specifically, the portable terminal apparatus 3 receives the result of the process transmitted in Step S275 from the terminal-vehicle linking apparatus 1 and displays the result of the process on the input and output device 52.

Thereafter, the procedures for releasing the rights temporarily given to a portable terminal apparatus are ended. Note that these procedures can be executed at a desired timing by the owner but are received after the manual driving by the non-owner is completed (not illustrated as a flowchart).

### (Application to Drive Instruction Plan)

The above description has been made on the premise that the vehicle is every time instructed to operate based on the instruction from the owner. However, it is also possible to register a predetermined operation in the terminal-vehicle linking apparatus 1. Now, assume that a record on the first row has already been stored in linkage information 31 (FIG. 2). The owner gets off the vehicle in which the in-vehicle apparatus C001 is mounted at the entrance of a hotel and enters a guest room while carrying the portable terminal apparatus M001.

The portable terminal apparatus M001 receives the following information (hereinafter referred to also as "departure preparation information") inputted by the owner through the input and output device 52. Note that "#" represents a different number in an omitted manner.
- Immediately park the vehicle at the #-th space in the #-th basement.
- Activate the air-conditioner of the vehicle to maintain the interior temperature at # °C after #(year) #(month) #(day) #(hour) #(minute).
- Pass the vehicle through a car wash line at #(year) #(month) #(day) #(hour) #(minute).
- Charge the battery of the vehicle to the limit of the capacity and fuel the vehicle to the limit of the capacity of the fuel tank at #(year) #(month) #(day) #(hour) #(minute).

Next, the portable terminal apparatus M001 transmits the departure preparation information to the terminal-vehicle linking apparatus 1. The terminal-vehicle linking apparatus 1 stores the departure preparation information while linking the departure preparation information with the record on the first row of the linkage information 31. Thereafter, the terminal-vehicle linking apparatus 1 establishes communications with the in-vehicle apparatus C001 through the network 4 and transmits a control signal for implementing a designated operation at a designated timing in the departure preparation information to the in-vehicle apparatus C001.

### (Advantageous Effects of the Present Embodiment)

The effects of the terminal-vehicle linking apparatus according to the present embodiment are as described below.
(1) The terminal-vehicle linking apparatus is capable of securely linking the portable terminal apparatus with the in-vehicle apparatus by registering the portable terminal apparatus of the driver and the in-vehicle apparatus as well as checking the correspondence of the authentication information.
(2) The terminal-vehicle linking apparatus is capable of managing the linkage between the portable terminal ID and the in-vehicle apparatus ID at two stages. The terminal-vehicle linking apparatus is thus capable of managing the presence or absence of authentication and also arranging drivers in order through any desired method before making fixed linkage.
(3) The terminal-vehicle linking apparatus is capable of handling a case where there are a plurality of drivers (an owner and a non-owner) like a valet parking.
(4) The terminal-vehicle linking apparatus is capable of setting the expiration time of the authentication information, which increases the security.
(5) The terminal-vehicle linking apparatus is capable of releasing the linkage between the portable terminal ID and the in-vehicle apparatus ID according to the owner's wish, and thus is capable of easily managing history of authentication.
(6) The terminal-vehicle linking apparatus is capable of deleting the in-vehicle apparatus ID according to the owner's wish, and thus is capable of protecting personal information in a case where the in-vehicle apparatus ID is a license plate number or the like.
(7) The terminal-vehicle linking apparatus displays the authentication information on the in-vehicle apparatus, and thus allows the owner to manage the authentication information in case of an emergency.

Note that the present invention is not limited to the above-described embodiment, but encompasses various modifications. For example, the above-described embodiment has been described in detail for explaining the present invention in an easily understandable manner, and the present invention is not necessarily limited to an embodiment including all the configurations described above. In addition, part of the configurations of a certain embodiment can be replaced with the configuration of another embodiment, and the configuration of another embodiment can be added to the configuration of a certain embodiment. Moreover, addition, deletion, and replacement of another configuration can be made on part of the configuration of each embodiment.

Features described in this specification shall be deemed combinable with each other also if their combination is not expressly mentioned, to the extent that this combination is technically feasible. Features described in a certain context, embodiment, figure or claim shall be deemed separable from this claim, context, figure or embodiment and shall be deemed combinable with other embodiments, contexts, figures or claims to the extent that it is technically feasible. Descriptions of a method or a method step shall be understood also as description of means and/or program instructions for implementing the method or method step, and vice versa.

## Claims

1. A terminal-vehicle linking apparatus (1) comprising:
a communication device (14) for communicating with portable terminal apparatuses (3) and with in-vehicle apparatuses (2),
a terminal-vehicle registering unit (21) adapted to receive and register registration information of a first portable terminal apparatus (3) to be used to permit driving a vehicle or instruct the vehicle and adapted to receive and register registration information of an in-vehicle apparatus (2) mounted in the vehicle; and
a terminal-vehicle linking unit (22) adapted to determine, when authentication information received from the first portable terminal apparatus of which the registration information has been received coincides with authentication information transmitted in advance to the in-vehicle apparatus (3) of which the registration information has been received, that it is possible to permit driving the vehicle or instruct the vehicle through the first portable terminal apparatus,
wherein the terminal-vehicle registering unit (21) is adapted to receive a first identifier from a second portable terminal apparatus used by a person other than a person who is permitted to drive the vehicle in which the in-vehicle apparatus identified by an issued second identifier is mounted, and
wherein the authentication information has an expiration time.

2. The terminal-vehicle linking apparatus according to claim 1,
wherein the terminal-vehicle linking unit is configured to release linkage between the first identifier and the second identifier.

3. The terminal-vehicle linking apparatus according to claim 2,
wherein the terminal-vehicle linking unit is configured to delete the second identifier from a storage unit.

4. The terminal-vehicle linking apparatus according to claim 3,
wherein the terminal-vehicle linking unit is configured to display the authentication information on the in-vehicle apparatus.

5. A non-transitory computer-readable medium storing a terminal-vehicle linking program for causing a terminal-vehicle linking apparatus to function, the program comprising instructions executable by a processor to:
cause a terminal-vehicle registering unit of the terminal-vehicle linking apparatus to perform processing of
receiving and registering registration information of a first portable terminal apparatus to be used to permit driving a vehicle or instruct the vehicle; and
receiving and registering registration information of an in-vehicle apparatus mounted in the vehicle;
cause a terminal-vehicle linking unit of the terminal-vehicle linking apparatus to perform processing of, when authentication information received from the first portable terminal apparatus of which the registration has been received coincides with authentication information transmitted in advance to the in-vehicle apparatus of which the registration has been received, determining that it is possible to permit driving the vehicle or instruct the vehicle through the first portable terminal apparatus,
cause the terminal-vehicle registering unit (21) to perform processing of receiving a first identifier from a second portable terminal apparatus used by a person other than a person who is permitted to drive the vehicle in which the in-vehicle apparatus identified by an issued second identifier is mounted, and
cause the authentication information to have an expiration time.

## Patentansprüche

1. Endgerät-Fahrzeug-Kopplungsvorrichtung (1), umfassend:
eine Kommunikationseinrichtung (14) zum Kommunizieren mit tragbaren Endgerätvorrichtungen (3) und mit fahrzeuginternen Vorrichtungen (2), eine Endgerät-Fahrzeug-Registrierungseinheit (21), die dazu geeignet ist, eine Registrierungsinformation einer ersten tragbaren Endgerätvorrichtung (3) zu empfangen und zu registrieren, die verwendet werden soll, um das Fahren eines Fahrzeugs zu erlauben oder das Fahrzeug anzuweisen, und die dazu geeignet ist, eine Registrierungsinformation einer fahrzeuginternen Vorrichtung (2), die in dem Fahrzeug angebracht ist, zu empfangen und zu registrieren; und
eine Endgerät-Fahrzeug-Kopplungseinheit (22), die dazu geeignet ist, wenn eine Authentifizierungsinformation, die von der ersten tragbaren Endgerätvorrichtung, von der die Registrierungsinformation empfangen wurde, empfangen wurde, mit einer Authentifizierungsinformation übereinstimmt, die vorab an die fahrzeuginterne Vorrichtung (3), von der die Registrierungsinformation empfangen wurde, übertragen wurde, zu ermitteln, dass es möglich ist, das Fahren des Fahrzeugs zu erlauben oder das Fahrzeug über die erste tragbare Endgerätvorrichtung anzuweisen,
wobei die Endgerät-Fahrzeug-Registrierungseinheit (21) dazu geeignet ist, einen ersten Identifikator von einer zweiten tragbaren Endgerätvorrichtung zu empfangen, die von einer anderen Person als einer Person verwendet wird, der es erlaubt ist, das Fahrzeug zu fahren, in dem die fahrzeuginterne Vorrichtung angebracht ist, die durch einen ausgegebenen zweiten Identifikator identifiziert wird, und
wobei die Authentifizierungsinformation eine Ablaufzeit aufweist.

2. Endgerät-Fahrzeug-Kopplungsvorrichtung nach Anspruch 1,
wobei die Endgerät-Fahrzeug-Kopplungseinheit ausgestaltet ist, um eine Kopplung zwischen dem ersten Identifikator und dem zweiten Identifikator zu lösen.

3. Endgerät-Fahrzeug-Kopplungsvorrichtung nach Anspruch 2,
wobei die Endgerät-Fahrzeug-Kopplungseinheit ausgestaltet ist, um den zweiten Identifikator aus einer Speichereinheit zu löschen.

4. Endgerät-Fahrzeug-Kopplungsvorrichtung nach Anspruch 3,
wobei die Endgerät-Fahrzeug-Kopplungseinheit ausgestaltet ist, um die Authentifizierungsinformation an der fahrzeuginternen Vorrichtung anzuzeigen.

5. Nicht-transitorisches von einem Computer lesbares Medium, das ein Endgerät-Fahrzeug-Kopplungsprogramm speichert, um zu bewirken, dass eine Endgerät-Fahrzeug-Kopplungsvorrichtung arbeitet, wobei das Programm Anweisungen umfasst, die durch einen Prozessor ausführbar sind, um:
zu bewirken, dass eine Endgerät-Fahrzeug-Registrierungseinheit der Endgerät-Fahrzeug-Kopplungsvorrichtung die Verarbeitung eines
Empfangens und Registrierens einer Registrierungsinformation einer ersten tragbaren Endgerätvorrichtung, die verwendet werden soll, um das Fahren eines Fahrzeugs zu erlauben oder das Fahrzeug anzuweisen; und
Empfangens und Registrierens einer Registrierungsinformation einer fahrzeuginternen Vorrichtung, die in dem Fahrzeug angebracht ist, durchführt;
zu bewirken, dass eine Endgerät-Fahrzeug-Kopplungseinheit der Endgerät-Fahrzeug-Kopplungsvorrichtung, wenn eine Authentifizierungsinformation, die von der ersten tragbaren Endgerätvorrichtung, von der die Registrierung empfangen wurde, empfangen wurde, mit einer Authentifizierungsinformation übereinstimmt, die vorab an die fahrzeuginterne Vorrichtung, von der die Registrierung empfangen wurde, übertragen wurde, die Verarbeitung eines Ermittelns, dass es möglich ist, das Fahren des Fahrzeugs zu erlauben oder das Fahrzeug über die erste tragbare Endgerätvorrichtung anzuweisen, durchführt,
zu bewirken, dass die Endgerät-Fahrzeug-Registrierungseinheit (21) die Verarbeitung eines Empfangens eines ersten Identifikators von einer zweiten tragbaren Endgerätvorrichtung durchführt, die von einer anderen Person als einer Person verwendet wird, der es erlaubt ist, das Fahrzeug zu fahren, in dem die fahrzeuginterne Vorrichtung angebracht ist, die durch einen ausgegebenen zweiten Identifikator identifiziert wird, und
zu bewirken, dass die Authentifizierungsinformation eine Ablaufzeit aufweist.

## Revendications

1. Appareil de liaison terminal-véhicule (1) comprenant :
un dispositif de communication (14) pour communiquer avec des appareils terminaux portables (3) et avec des appareils embarqués (2),
une unité d'enregistrement terminal-véhicule (21) adaptée à recevoir et enregistrer des informations d'enregistrement d'un premier appareil terminal portable (3) à utiliser pour autoriser la conduite d'un véhicule ou donner des instructions au véhicule, et adaptée à recevoir et enregistrer des informations d'enregistrement d'un appareil embarqué (2) monté dans le véhicule ; et
une unité de liaison terminal-véhicule (22) adaptée à déterminer, lorsque des informations d'authentification reçues du premier appareil terminal portable dont les informations d'enregistrement ont été reçues coïncident avec des informations d'authentification transmises à l'avance à l'appareil embarqué (3) dont les informations d'enregistrement ont été reçues, qu'il est possible d'autoriser la conduite le véhicule ou de donner des instructions au véhicule par l'intermédiaire du premier appareil terminal portable,
dans lequel l'unité d'enregistrement terminal-véhicule (21) est adaptée à recevoir un premier identifiant d'un second appareil terminal portable utilisé par une personne autre qu'une personne qui est autorisée à conduire le véhicule dans lequel est monté l'appareil embarqué identifié par un second identifiant émis, et
dans lequel les informations d'authentification ont une durée d'expiration.

2. Appareil de liaison terminal-véhicule selon la revendication 1,
dans lequel l'unité de liaison terminal-véhicule est configurée pour libérer la liaison entre le premier identifiant et le second identifiant.

3. Appareil de liaison terminal-véhicule selon la revendication 2,
dans lequel l'unité de liaison terminal-véhicule est configurée pour supprimer le second identifiant d'une unité de stockage.

4. Appareil de liaison terminal-véhicule selon la revendication 3,
dans lequel l'unité de liaison terminal-véhicule est configurée pour afficher les informations d'authentification sur l'appareil embarqué.

5. Support non transitoire lisible par ordinateur stockant un programme de liaison terminal-véhicule pour faire fonctionner un appareil de liaison terminal-véhicule, le programme comprenant des instructions exécutables par un processeur pour :
faire en sorte qu'une unité d'enregistrement terminal-véhicule de l'appareil de liaison terminal-véhicule effectue le traitement consistant à :
recevoir et enregistrer des informations d'enregistrement d'un premier appareil terminal portable à utiliser pour autoriser la conduite d'un véhicule ou donner des instructions au véhicule ; et
recevoir et enregistrer des informations d'enregistrement d'un appareil embarqué monté dans le véhicule ;
faire en sorte qu'une unité de liaison terminal-véhicule de l'appareil de liaison terminal-véhicule effectue un traitement consistant, lorsque des informations d'authentification reçues du premier appareil terminal portable dont l'enregistrement a été reçu coïncident avec des informations d'authentification transmises à l'avance à l'appareil embarqué dont l'enregistrement a été reçu, à déterminer qu'il est possible d'autoriser la conduite du véhicule ou de donner des instructions au véhicule par l'intermédiaire du premier appareil terminal portable,
faire en sorte que l'unité d'enregistrement terminal-véhicule (21) effectue le traitement consistant à recevoir un premier identifiant d'un second appareil terminal portable utilisé par une personne autre qu'une personne qui est autorisée à conduire le véhicule dans lequel est monté l'appareil embarqué identifié par un second identifiant émis, et
faire en sorte que les informations d'authentification aient une durée d'expiration.
